# EUROPEAN PATENT APPLICATION

(11) **EP 4 737 761 A1**
(43) Date of publication of application: **06.05.2026**
(21) Application number: 24210620.1
(22) Date of filing: 04.11.2024
(51) Int. Cl.: F16F 15/067

(54) **A SHOCK ABSORBER AND A SYSTEM FOR SHOCK ABSORBTION**

(71) Applicant: Axis AB, 223 69 Lund (SE)
(72) Inventor: Radnic, Tomá, 143 01 Prague (CZ)
(74) Representative: AWA Sweden AB

(57) **Abstract**

A shock absorber (100) comprising: a housing (110) having an inner wall surface (112) defining a cavity (114) extending along a longitudinal axis (115) and comprising an open top end (116) and an opposing bottom end (118), the inner wall surface (112) being provided with a recess (113); a body (120) comprising a portion (122) housed in the cavity (114); a shock absorbing element (130) arranged in the cavity (114) between the portion (122) of the body (120) and the bottom end (118) of the cavity (114); and a biasing element (124) and a locking element (126) arranged in the portion (122) of the body (120), wherein the biasing element (124) is configured to press the locking element (126) with a biasing force against the inner wall surface (112) of the housing (110), wherein the portion (122) of the body (120) is displaceable against counteraction of the shock absorbing element (130), along the longitudinal axis (115) of the cavity (114), from a first position, in which the locking element (126) extends into the recess (113) of the inner wall surface (112), to a second position located between the first position and the bottom end (118) of the housing (110), and wherein the shock absorbing element (130) is configured to counteract displacement of the portion (122) of the body (120) from the first position to the second position.

## Description

### Field of the invention

The present disclosure relates to shock absorbers used in various types of devices and equipment. More particularly, the disclosure relates an improved shock absorber design that enables nonlinear shock absorption.

### Background art

There is a continuous need to enhance the durability and performance of devices subjected to rigorous testing and operational conditions. Examples of such devices include those subject to vandalism or IK testing, which is a standardized method used to assess the impact resistance of enclosures by measuring their ability to withstand mechanical shocks and impacts. These conditions can significantly reduce the lifespan and reliability of the devices if not properly managed.

One way to address these challenges is through the use of shock absorbers. Shock absorbers are designed to mitigate the effects of sudden impacts and vibrations, thereby extending lifespan, and mitigating outright destruction of the devices they protect.

However, an issue arises in ensuring that while the shock absorbers effectively absorb shocks, they do not compromise a user's perception of the device's structural solidity and immovability. A rigid and stable design that feels secure and unyielding, under normal usage conditions, is usually important for an adequate user experience.

Therefore, there is a need for an improved shock absorber that not only enhances the durability and impact resistance of the device but also maintains the desired solid and immovable feel for the user.

### Summary of the invention

It is an object of the present disclosure to provide a shock absorber for enabling non-linear shock absorption.

It is another object to provide a shock absorber that maintains structural solidity and immovability under conditions of low or minor shocks.

Yet another object is to provide a system comprising two or more shock absorbers for enabling nonlinear shock absorption.

A further object is to provide a module having integrally formed thereon two or more shock absorbers for enabling integrated nonlinear shock absorption of devices.

To achieve at least one of the above objects and also other objects that will be evident from the following description, a shock absorber having the features defined in claim 1 is provided according to the present invention. Preferred embodiments will be evident from the dependent claims.

More specifically, there is provided according to a first aspect of the present invention a shock absorber. The shock absorber comprises: a housing having an inner wall surface defining a cavity extending along a longitudinal axis and comprising an open top end and an opposing bottom end, the inner wall surface being provided with a recess; a body comprising a portion housed in the cavity; a shock absorbing element arranged in the cavity between the portion of the body and the bottom end of the cavity; and a biasing element and a locking element arranged in the portion of the body, wherein the biasing element is configured to press the locking element with a biasing force against the inner wall surface of the housing, wherein the portion of the body is displaceable along the longitudinal axis of the cavity, from a first position, in which the locking element extends into the recess of the inner wall surface, to a second position located between the first position and the bottom end of the housing, and wherein the shock absorbing element is configured to counteract displacement of the portion of the body from the first position to the second position.

Hereby, there is provided a shock absorber enabling nonlinear shock absorption.

In other words, the shock absorber may handle high local loads or hits while its nonlinear response may provide a solid feeling. In particular, the nonlinearity provided by the shock absorber may be great enough to facilitate a solid feeling of a device having the shock absorber integrated therein. The nonlinear response is obtained by the combination of the biasing element which will be pushed away from, or forced out of, the recess at a certain force loading, and the shock absorbing element which is activated or engaged after the biasing element has been pushed away from the recess.

The housing may be a casing or an enclosure configured to house the shock absorbing element and at least a portion of the body. The housing may in other words provide support for the internal components of the shock absorber, ensuring they are securely contained.

The portion of the body may be configured to move in a piston-like manner within the housing along the longitudinal axis, i.e., guided by the inner wall surface of the housing. The piston-like movement allows for controlled linear motion of at least the portion of the body within the cavity of the housing.

The longitudinal axis may refer to a primary axis along which the length of the shock absorber extends. This axis may typically be oriented parallel to the direction of the primary force or motion that the shock absorber is designed to mitigate. In the context of the present disclosure, the longitudinal axis may be interpreted as the central axis running through the length of the shock absorber, from one end to the other.

The open top end of the housing may, for example, be closed by the body or the portion of the body. In other words, the body may be designed to seal the housing while allowing for piston-like movement along the longitudinal axis. This configuration may ensure that the internal components remain protected while the shock absorber performs its function effectively.

Additionally, the housing or opening of the housing may include features such as gaskets, lubricants, and/or mechanisms to prevent the ingress of dust, moisture, and other contaminants. Such features may further assist in maintaining integrity and functionality of the shock absorber and internal components thereof.

The shock absorbing element may have a higher compression stiffness than the biasing element.

In other words, when a pressure or force is exerted on the body of the shock absorber, at least partly along a direction of the longitudinal axis, the biasing element may yield for relatively low forces such that the shock absorbing element may be engaged to handle dampening of larger forces.

This difference in compression stiffness between the biasing element and the shock absorbing element may enable the biasing element to absorb initial, lower magnitude forces, preventing premature engagement of the second element. This staged response allows for a more controlled absorption of energy and reducing the risk of damage under varying load conditions. Additionally, by the shock absorbing element engaging only when higher forces are encountered, the shock absorber may provide a rigidity when subjected to relatively low forces. The selective engagement may also enable the shock absorber to handle a wider range of forces effectively.

In the context of this application, "low forces" may refer to forces that are relatively small in magnitude and typically occur during normal operational conditions. These low forces may be sufficient to cause the shock absorber to absorb some degree of shocks via the biasing element without engaging the shock absorbing element. On the other hand, "high forces" may be larger in magnitude and occur under more extreme conditions, such as impacts or heavy loads. These forces exceed the capacity of the biasing and locking element, causing the shock absorbing element to engage and provide additional dampening or shock absorption.

The biasing element may be configured to release the locking element from the recess in response to an external force exerted on the body. The external force may have a component extending in parallel with the longitudinal axis of the cavity and exceeding a threshold value.

Hence, the body may be displaced along the longitudinal axis and engage with the shock absorbing element such that the shock absorbing element may counteract the displacement. Thus, a rigidity of the shock absorber is further enabled for forces not exceeding the threshold value.

The threshold value may correspond to a locking force resulting from the locking element being extended into the recess of the inner wall surface.

In other words, in the event the external force overcomes a locking force (threshold value) provided by the biasing element pressing the locking element into the recess, the biasing element and locking may be disengaged.

A width of the locking element, along the longitudinal axis of the cavity, may be larger than a width of the recess along the longitudinal axis of the cavity. Specifically, along the longitudinal axis, a maximum width of the locking element may be larger than a maximum width of the recess.

Hence, the locking element does not fully enter or engage with the recess. In particular, only a portion of the locking element may then be accommodated by the recess.

When the locking element partially extends, or is pressed, into the recess, a force exerted on the body along the longitudinal axis may enable gradual displacement or sliding of the locking element out of the recess. Thus, a controlled release of the locking element may be provided.

Additionally, there may be friction between the locking element and the recess. This frictional force may act as a further resistance to the movement of the locking element, thus requiring an additional force to ensure the locking element is displaced or slid out of the recess. In other words, overcoming both a biasing force exerted by the biasing element pressing the locking element against the recess, and the frictional force between the locking element and the recess.

An end of the locking element facing the inner wall surface may have a curvature. The curvature may allow an end portion associated with said end to be received by the recess when the portion of the body is in the first position.

Hence, the locking element may, for example, take the form of an arc, semi-circle, sphere, circle segment, or similar shape.

The curvature at the end of the locking element may facilitate alignment and insertion of the locking element into the recess. Additionally, in response to a force on the body along the longitudinal axis, the locking element may be facilitated to slide in and/or out from the recess due to this curvature.

Alternatively, or additionally, the recess itself may comprise curved edges for similar reason, or to provide a secure fit and enable the locking element to slide in and/or out from the recess smoothly.

The recess may be a cylindrical cut-out from the housing and/or an indentation of a portion of the inner wall surface. The recess may be configured as an inverse of at least a part of the locking element, e.g., such that at least a portion of the locking element fits precisely within the recess, analogous to a complementary geometric configuration or a conformal fit.

The shock absorbing element and/or biasing element may be a compression spring. The term 'compression spring' refers to a type of spring that compresses under load and returns to its original shape when the load is removed.

A compression spring may facilitate the shock absorber's ability to absorb energy efficiently. The helical structure allows for uniform load distribution and consistent behaviour over time. Additionally, compression springs are compact and can be easily integrated without requiring significant space. It is also understood that other shock absorbing elements, such as hydraulic dampers, rubber mounts, or air springs, may be implemented.

Furthermore, the compression spring constituting the shock absorbing element may be pre-tensed, or in rest, when the shock absorber is in a rest state. This means that the compression spring may be under some degree of compression even when no external force is applied. With `rest state' of the shock absorber may be meant a state in which the locking element is engaged with the recess, or when the body is in an initial position.

Upon a displacement of the body of the shock absorber, the body may engage the compression spring, causing it to counteract the displacement. Additionally, the compression spring may facilitate resetting the shock absorber, i.e., bringing the shock absorber to its rest state and/or the body back to its initial (first) position. The pre-tensioning of the shock absorbing element may, e.g., cause the body and the biasing element thereof to be automatically reset after displacement.

Alternatively, the shock absorber may be configured to prevent itself from resetting automatically. For example, the shock absorber may remain partially pressed down as an indicator of having been activated or triggered, e.g., for signalling that an inspection may be required. Hence, the shock absorber may maintain its pressed down state (i.e., second position) until a manual reset is performed, e.g., providing a visual cue for maintenance personnel.

When the biasing element is a compression spring, the spring may be pre-tensed such that the locking element is actively, i.e., constantly, pressed against the inner wall surface of the housing. However, when the locking element engages the recess, the compression spring constituting the biasing element may, e.g., be in rest.

Hence, when a force is exerted, at least partially along the longitudinal axis, the force may initially be translated to the biasing element via the locking element, causing the compression spring thereof to be compressed until the biasing force is overcome and the locking element begins gliding against the inner wall surface of the housing.

The shock absorbing element may be a spring oriented compressible along the longitudinal axis of the cavity and/or the biasing element may be a spring oriented compressible along an axis perpendicular to the longitudinal axis of the cavity.

In other words, the spring of the shock absorbing element may counteract a displacement of the body along the longitudinal axis, e.g., such that the spring effectively absorbs shocks and vibrations that occur in the same direction.

On the other hand, the spring of the biasing element being oriented along an axis perpendicular to the longitudinal axis, facilitates the non-linear shock absorption of the shock absorber. For example, the biasing element may then provide a biasing force by (perpendicularly) pressing the locking element against the inner wall surface of the housing, irrespectively of the shock absorbing element. In yet other words, the shock absorbing element may counteract a displacement after which the biasing force, exerted by the biasing element pressing the locking element against the inner wall surface of the housing, has been overcome.

According to a second aspect, there is provided a system configured for shock absorption, the system comprising two or more shock absorbers according to the first aspect.

The second aspect may generally present the same or corresponding advantages as the first aspect.

The system may further comprise: a first part, and a second part attachable to the first part. The housing of the respective shock absorber may be attached to the first part, and the body of the respective shock absorber may be attached to the second part.

Hereby, shock absorption is enabled for the system. In particular, a force exerted on the first and/or second part may be compensated or dampened by the integrated shock absorbers.

The non-linear shock absorption enabled by the shock absorbers provides a solid and rigid system when being subject to forces below a threshold or forces smaller than the biasing force.

Similarly, when subject to relatively large forces, or forces above a threshold, the shock absorbing element is engaged to absorb or dampen the greater force.

Thus, a system comprising the described shock absorber can be rigid for smaller forces and effectively handle larger forces or sudden impacts. In other words, the system can deform to absorb and dissipate energy without breaking or sustaining significant damage. As a result, it can be more resistant to vandalism or other forms of physical abuse. By incorporating such a shock absorbing element, the system enhances its durability and longevity, ensuring that it remains functional and intact even under harsh conditions. As previously discussed, the shock absorbers, and consequently the system, may reset itself to an initial state.

In an example, when the first part and the second part are compressed or forced together with greater forces, the shock absorbers allow for this movement by compressing under the applied force. This means that the absorbers can handle greater forces, enabling the first and second parts to, e.g., move closer together without causing damage to the parts or system itself. Hence, the absorbers effectively absorb and dissipate the energy from the force, preventing the parts from breaking, thereby enabling that the system can better withstand significant impacts, enhancing its durability and resistance to damage.

The respective shock absorber may be concealed by the first and second part. In other words, the shock absorbers may be internal to the system.

Hence, the shock absorbers do not affect an external design or appearance of the system, while still providing the additional advantages provided by the shock absorbers, i.e., solid felling for smaller forces (such as under normal and/or intended usage) and enhanced durability and impact resistance.

The first part may be a wall or a wall-mountable module such as a flush box, and/or the second part may be an interface module or a frame.

A "flush box" may refer to an enclosure that is installed within a wall, providing an unobtrusive housing for electrical connections or other components. An "interface module" may be a component configured for user interaction.

The system may be an intercom system. Hence, there is enabled an intercom system with enhanced durability and impact resistance.

In particular, the intercom system may provide a solid feeling for normal or intended usage, while being capable of absorbing shocks.

In a specific instance where the intercom system includes a dial or buttons, the buttons can be pressed without causing other movements of the intercom system. However, in the event of an impact, such as an intentional shock for vandalism purposes, the intercom system absorbs the shock and yields or displaces in a controlled manner. This controlled deformation minimizes the risk of damage to the components or parts of the intercom system.

According to a third aspect, there is provided a module having integrally formed thereon two or more housings and/or bodies of shock absorbers according to the first aspect.

The third aspect may generally present the same or corresponding advantages as the first and second aspects.

Further, by being integrally formed, these components can be produced as a single piece, typically through an extrusion process. This manufacturing approach reduces the number of separate components required, simplifying assembly, and reducing potential points of failure or breakage as there are fewer joints or connections.

The module may be a frame, an interface module, a wall-mountable module, or a flush box for an intercom device.

Generally, all terms used in the claims are to be interpreted according to their ordinary meaning in the technical field, unless explicitly defined otherwise herein. All references to "a/an/the [element, device, component, means, etc]" are to be interpreted openly as referring to at least one instance of said element, device, component, means, step, etc., unless explicitly stated otherwise.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Figure 1 schematically illustrates a cross-section of a shock absorber.
Figure 2 schematically illustrates an exploded view of a system comprising shock absorbers.
Figure 3 illustrates an exemplary deformation graph of a shock absorber in relation to an exerted force.

### Description of embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

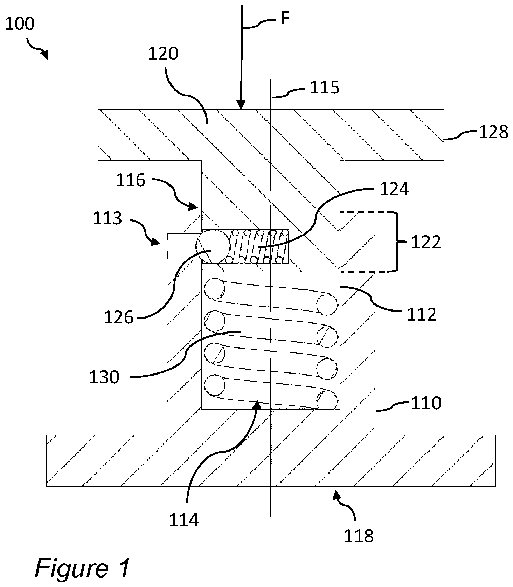

Figure 1 shows a cross section of a shock absorber 100. The shock absorber 100 comprises a housing 110 having an inner wall surface 112 defining a cavity 114 extending along a longitudinal axis 115 and comprising an open top end 116 and an opposing bottom end 118.

The housing 110 may, e.g., be constructed or extruded from a plastic or metal material. In certain examples, the cavity 114 of the housing 110 may have an exemplary diameter in a range of 8-20 mm and/or a length of 10-25 mm, however, it is appreciated that the shock absorber 100 may be scaled to any suitable extent.

As further seen in Figure 1, the inner wall surface 112 is provided with a recess 113. Here the recess is a depicted as a through-hole or cut-out that extends through the housing (i.e., wall of the housing). It should be understood, although not explicitly shown in the figure, that the recess 113 may alternatively be a partial cut-out or an indentation located on the inner wall surface 112 of the housing 110.

The shock absorber 100 further comprises a body 120 comprising a portion 122 housed in the cavity 114, and a shock absorbing element 130 arranged in the cavity 114 between the portion 122 of the body 120 and the bottom end 118 of the cavity 114.

A width or diameter of the portion 122 of the body 120 may be substantially the same as the width or diameter of the cavity 114, e.g., allowing the body 120 to move smoothly without excessive play or friction. Hence, unwanted lateral movements may be minimized, and the force may be transmitted along an intended path.

Similarly, the shock absorbing element 130 may be designed to have a width or diameter that closely matches that of the cavity 114. Hence, e.g., ensuring that the shock absorbing element 130 is housed securely with minimal play within the cavity 114.

In Figure 1, the shock absorbing element 130 is a compression spring. However, it is to be understood that the shock absorbing element 130 may be any suitable element capable of shock absorption, e.g., other types of springs (such as tension or torsion springs), elastomeric materials (like rubber or silicone), hydraulic or pneumatic dampers, foam inserts, or a mechanism or material that can absorb and dissipate energy from impacts.

The body 120 in Figure 1 has a cap 128 extending in a plane perpendicular to the longitudinal axis 115. The width of the cap 128 is larger than the width of the cavity 114. Hence, the cap 128 may restrict the body 120 from entering the cavity 114 beyond a specific limit. Alternatively, or additionally, the cap 128 may provide an extended surface for attachment to an external part.

Although not explicitly shown in the figure, the housing 110 may include mounting brackets positioned along the inner wall surface 112. These mounting brackets may take the form of channels or ridges extending parallel to the longitudinal axis 115, e.g., to prevent the body 120 from rotating within the housing (i.e., guiding brackets). Correspondingly, the body 120 may feature complementary structures, such as protrusions or grooves, that fit within the channels or ridges to enable fixed alignment. Additionally, mounting brackets at the inner surface wall 112, or at a bottom of the cavity 114, may be used to secure the shock absorbing element 130 within the cavity 114.

The open top end 116 is sealed by the body 120. The body 120, or the portion 122 of the body 120, may include a gasket, although not explicitly shown. The gasket may enable a watertight seal, providing protection against moisture and environmental factors.

The shock absorber 100 in Figure 1 is further shown to comprise a biasing element 124 and a locking element 126 arranged in the portion 122 of the body 120 housed in the cavity 114.

The biasing element 124 in Figure 1 is a compression spring. However, it is to be understood that the biasing element 124 may be any suitable element capable of providing a biasing force (and preferably some degree of shock absorption). Examples include tension or torsion springs, elastomeric materials, hydraulic or pneumatic dampers, foam inserts, or a mechanism or material that can deform in a controlled manner, e.g., when absorbing and/or dissipating energy, and return to an original state.

Specifically, in the example shown in Figure 1, the shock absorbing element 130 is a spring oriented compressible along the longitudinal axis 115 of the cavity 114 and the biasing element 124 is a spring oriented compressible along an axis perpendicular to the longitudinal axis 115 of the cavity 114.

Further, the biasing element 124 and the locking element 126 are arranged in a lower portion of the body 120. Particularly, in Figure 1, the biasing element 124 and locking element 126 are arranged in a lower portion of the portion 122 of the body 120 housing in the cavity 114.

The biasing element 124 and at least part of the locking element 126 are housed in a cavity of the body 120.

Further, the biasing element 124 presses the locking element 126 with a biasing force against the inner wall surface 112 of the housing 110. Specifically, in the state (e.g., initial state) of the shock absorber 130 shown in Figure 1, the biasing element 124 presses the locking element 126 with the biasing force against the recess 113 of the inner wall surface 112 of the housing 110.

The portion 122 of the body 120 is displaceable along the longitudinal axis 115 of the cavity 114, from a first position, in which the locking element 126 extends into the recess 113 of the inner wall surface 112, to a second position located between the first position and the bottom end 118 of the housing 110. Hence, in the first position, the biasing element 124 presses the locking element 126 with the biasing force against the recess 113. Similarly, when in the second position, the biasing element 124 presses the locking element 126 against the inner wall surface 112.

The shock absorbing element 130 is configured to counteract displacement of the portion 122 of the body 120 from the first position to the second position.

Additionally, the biasing element 124 and locking element 126 are configured to counteract displacement of the body 120 by locking it with the biasing force (in the first position and when engaged with the recess 113).

The biasing element 124 is configured to release the locking element 126 from the recess 113 in response to an external force, F, exerted on the body 120, the external force, F, having a component extending in parallel with the longitudinal axis 115 of the cavity 114 and exceeding a threshold value.

In other words, when an external force, F, or pressure is exerted on the body 120 exceeds the biasing force, the locking element 126 is disengaged form the recess 113 and the shock absorbing element 130 is engaged. Hence, the shock absorbing element 130 may counteract displacement of the portion 122 of the body 120 when subject to forces or pressures exceeding the biasing force.

However, the threshold value may correspond to a locking force resulting from the locking element 126 being extended into the recess 113 of the inner wall surface 112. Hence, the shock absorbing element 130 may counteract displacement of the portion 122 of the body 120 when subject to forces or pressures exceeding the locking force. The locking force may, e.g., be a resultant of the biasing force pressing the locking element 126 into the recess 113, a friction between the locking element 126 and the inner wall surface 112, and/or a mechanical obstruction provided by the locking element 126 extending into the recess 113).

Generally, the shock absorbing element 130 may have a higher compression stiffness than the biasing element 124. Hence, the shock absorbing element 130 may compensate relatively large forces, while the biasing element 124 and locking element 126 may prevent the body 120 from moving for relatively small forces.

As further depicted in Figure 1, a width of the locking element 126, along the longitudinal axis 115 of the cavity 114, is larger than a width of the recess 113 along the longitudinal axis 115 of the cavity 114. Hence, only a portion of the locking element 126 is inserted to the recess 113.

The locking element 126 is depicted as being circular, specifically, an end of the locking element 126 facing the inner wall surface 112 has a curvature. The curvature may assist in allowing an end portion associated with said end to be received by the recess 113 when the portion 122 of the body 120 is in the first position. Furthermore, as understood from Figure 1, the curvature of the locking element 126 may assist the locking element 126 in sliding in and/or out of the recess 113.

In an example, the recess 113 may be formed as an inverse of at least a part of the locking element 126. In other words, at least a portion of the locking element 126 may fit conformally with the recess 113, e.g., such that the locking element 126 may be smoothly slid in and/or out from the recess 113 in response to the external force, F.

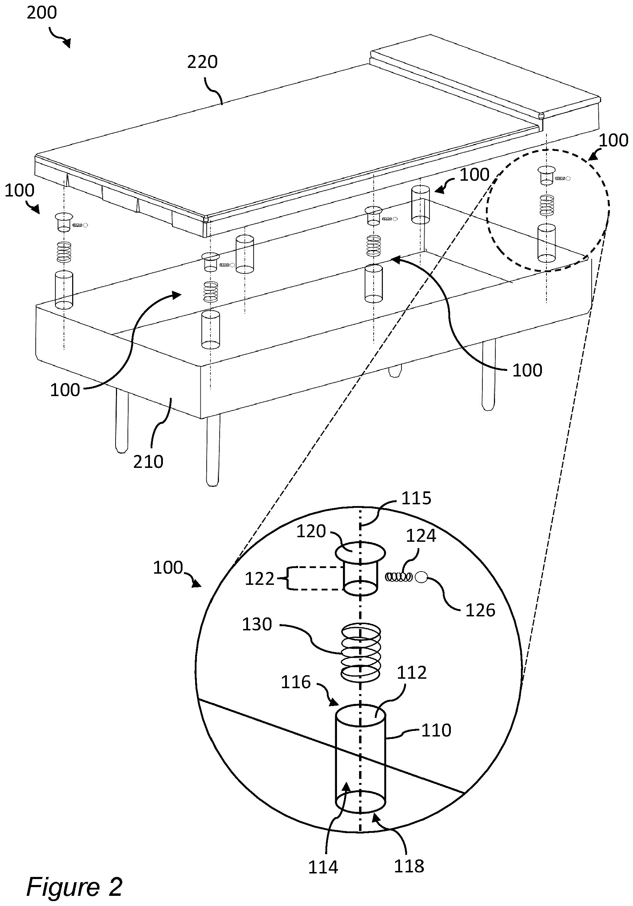

Figure 2 shows an exploded view of a system 200 configured for shock absorption, the system 200 comprises six shock absorbers 100, e.g., as explained in relation to Figure 1. However, it is appreciated that any suitable number of shock absorbers 100 may be used, e.g., two or more shock absorbers 100.

The system 200 depicted in Figure 2 is further seen to comprise a first part 210, and a second part 220 attachable to the first part 210.

The housing 110 of the respective shock absorber 100 is configured to be attached to the first part 210, and the body 120 of the respective shock absorber 100 is configured to be attached to the second part 220.

An exploded view of a simplified schematic of a shock absorber 100 of the system 200 is depicted in an enlarged view in Figure 2.

Here, the shock absorber 100 is depicted as being cylindrical, however, the shock absorber 100 may take various shapes and configurations. The shock absorber 100 may be designed in other geometries, such as rectangular or any other suitable shape that allows for a housing 110 thereof to comprise a cavity 114 that can house at least a portion 122 of the body 120 and a shock absorbing element 130.

Although not shown in detail in Figure 2, the body 120 of the shock absorber 100 configured to house a biasing element 124 and at least part of a locking element 126.

When assembled, the body 120 will be arranged at an open end 116 of the housing 110, and the biasing element 124 will push the locking element towards an inner wall surface 112 of the housing 110.

Both the biasing element 124 and the shock absorbing element 130 are compression springs in Figure 2.

Further, the respective shock-absorber 100 is configured to be concealed by the first part 210 and the second part 220 when the first 210 and second parts 220 are attached to each other. Hence, the shock absorbers 100 are arranged internally within the system 200.

The shock absorbers 100 may particularly connect the first part 210 to the second part 220. In other words, the shock absorbers 100 may act as connectors between the first and second part 210, 220.

The system 200 schematically depicted in Figure 2, is an intercom system where the first part 210 is a wall-mountable module (i.e., a flush box) and the second part 220 is an interface module. However, the system 200 may be other systems where (non-linear) shock absorption may be desired, e.g., in electronic devices or a surveillance camera. For example, systems where a rigid of solid feeling is desired for normal or daily usage, and where a shock absorption could be utilized or desired to prevent permanent damages when exerted to greater forces.

Although not explicitly shown in the figure, the first part 210 and/or second part 220 may respectively represent a module 210, 220 having integrally formed thereon the housings 110 or bodies 120 of the shock absorbers 100.

For example, the housing 110 of each shock absorber may be integrally formed on the first part 210. Similarly, the body 120 of each shock absorber 100 may be integrally formed om the second part 220.

Hence, in an alternative to integrating shock absorbers 100 as separate devices in a system, the shock absorbers 100 may be assembled during assembly of the system, e.g., by having a part or parts of the shock absorber being part of the system components.

First and second parts 210, 220 (modules) may, e.g., be a frame, an interface module, a wall-mountable module, or a flush box for an intercom device.

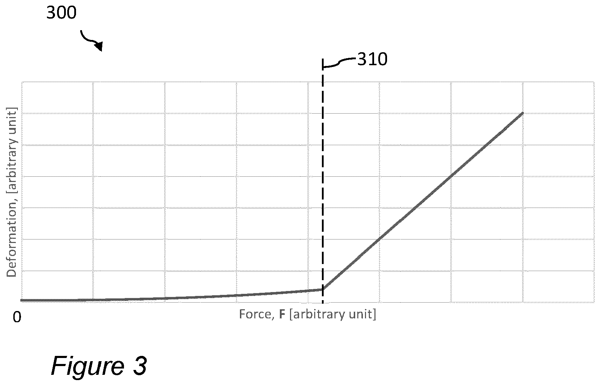

Figure 3 illustrates an exemplary deformation graph 300 of a shock absorber 100, e.g., as described in relation to Figure 1 and/or Figure 2, in relation to an exerted external force, F.

The deformation graph 300 provides an approximate visual representation of a response of the shock absorber 100 to different sizes of the external force, F. The deformation graph 300 plots the deformation (or displacement) of the body 120 of the shock absorber 100 on the vertical axis against the exerted force, F, on the horizontal axis.

In the initial region of the deformation graph 300, there is a gradually increasing relationship where the deformation slowly and minorly increases with the applied force, F. This region represents the role of the biasing element 124 and the locking element 126 of the shock absorber 100, where the shock absorber 100 only marginally deforms. In this phase, the shock absorber 100 is locked by the locking element 126 being engaged with the recess 113, and the biasing force (locking force) is preventing the deformation. However, as the biasing force or locking force is gradually counteracted and overcome by the external force, F, the biasing element 124 becomes compressed and the locking element 126 is pushed into the cavity of the body 120 while sliding out from the recess 113.

As the force, F, continues to increase, the graph 300 reaches a point or threshold value 310 where the slope changes. This indicates the transition from the biasing element 124 counteracting the displacement of the body 120, to the shock absorbing element 130 counteracting the displacement of the body 120. Beyond this point, the shock absorber 100 deforms linearly, i.e., the displacement of the body 120 changes in a linear manner.

For even larger forces (not shown), the shock absorber 100 may experience plastic deformation or structural failure, such as cracking or breaking.

As seen in Figure 3, the shock absorber 100 has a non-linear shock absorption and response to an external force, F. Thereby providing a substantially rigidity for relatively small forces, while yielding and counteracting forces above the threshold value 310.

The overall shape and characteristics of the deformation graph 300 illustrate the non-linear performance of the shock absorber 100, including its stiffness, damping properties, and energy absorption capacity.

It will be appreciated that the present invention is not limited to the embodiments shown. Several modifications and variations are thus conceivable within the scope of the invention which thus is exclusively defined by the appended claims.

## Claims

1. A shock absorber (100) comprising:
a housing (110) having an inner wall surface (112) defining a cavity (114) extending along a longitudinal axis (115) and comprising an open top end (116) and an opposing bottom end (118), the inner wall surface (112) being provided with a recess (113);
a body (120) comprising a portion (122) housed in the cavity (114);
a shock absorbing element (130) arranged in the cavity (114) between the portion (122) of the body (120) and the bottom end (118) of the cavity (114); and
a biasing element (124) and a locking element (126) arranged in the portion (122) of the body (120),
wherein the biasing element (124) is configured to press the locking element (126) with a biasing force against the inner wall surface (112) of the housing (110),
wherein the portion (122) of the body (120) is displaceable along the longitudinal axis (115) of the cavity (114), from a first position, in which the locking element (126) extends into the recess (113) of the inner wall surface (112), to a second position located between the first position and the bottom end (118) of the housing (110), and
wherein the shock absorbing element (130) is configured to counteract displacement of the portion (122) of the body (120) from the first position to the second position.

2. The shock absorber according to claim 1, wherein the shock absorbing element has a higher compression stiffness than the biasing element.

3. The shock absorber according to claim 1 or 2, wherein the biasing element is configured to release the locking element from the recess in response to an external force exerted on the body, the external force having a component extending in parallel with the longitudinal axis of the cavity and exceeding a threshold value.

4. The shock absorber according to claim 3, wherein the threshold value corresponds to a locking force resulting from the locking element being extended into the recess of the inner wall surface.

5. The shock absorber according to any one of the preceding claims, wherein a width of the locking element, along the longitudinal axis of the cavity, is larger than a width of the recess along the longitudinal axis of the cavity.

6. The shock absorber according to any one of the preceding claims, wherein an end of the locking element facing the inner wall surface has a curvature allowing an end portion associated with said end to be received by the recess when the portion of the body is in the first position.

7. The shock absorber according to any one of the preceding claims, wherein the shock absorbing element and/or biasing element is a compression spring.

8. The shock absorber according to claim 7, wherein the shock absorbing element is a spring oriented compressible along the longitudinal axis of the cavity and/or the biasing element is a spring oriented compressible along an axis perpendicular to the longitudinal axis of the cavity.

9. A system configured for shock absorption, the system comprising two or more shock absorbers (100) according to any one of claim 1-8.

10. The system according to claim 9, further comprising:
a first part (210), and
a second part (220) attachable to the first part (210),
wherein the housing (110) of the respective shock absorber (100) is attached to the first part (210), and the body (120) of the respective shock absorber (100) is attached to the second part (220).

11. The system according to claim 10, wherein the respective shock-absorber is concealed by the first and second part.

12. The system according to claim 10 or 11, wherein the first part is a wall or a wall-mountable module such as a flush box, and/or wherein the second part is an interface module or a frame.

13. The system according to any one of claims 9-11, wherein the system is an intercom system.

14. A module (210, 220) having integrally formed thereon two or more housings (110) and/or bodies (120) of shock absorbers (100) according to any one of claims 1-8.

15. The module according to claim 13, wherein the module is a frame, an interface module, a wall-mountable module, or a flush box for an intercom device.
